# EUROPÄISCHE PATENTSCHRIFT

(11) **EP 2 694 297 B1**
(45) Veröffentlichungstag und Bekanntmachung des Hinweises auf die Patenterteilung: **06.09.2017**
(21) Anmeldenummer: 12718066.9
(22) Anmeldetag: 05.04.2012
(51) Int. Cl.: B42D 25/351, B42D 25/378

(54) **DATENTRÄGER MIT SICHERHEITSELEMENT UND VERFAHREN ZUR HERSTELLUNG DES DATENTRÄGERS**
DATA CARRIER WITH SECURITY ELEMENT AND PROCESS TO MANUFACTURE THE DATA CARRIER
SUPPORT DE DONNÉES AVEC ÉLÉMENT DE SÉCURITÉ ET PROCÉDÉ POUR FABRIQUER LE SUPPORT DE DONNÉES

(30) Priorität: 08.04.2011 DE 102011016511
(43) Veröffentlichungstag der Anmeldung: 12.02.2014
(73) Patentinhaber: Giesecke+Devrient Currency Technology GmbH, 81677 München (DE)
(72) Erfinder: SCHIFFMANN, Peter, D-81673 München (DE); OTTO, Daniela, 81669 München (DE); FRANZ, Peter, 85567 Pienzenau/Bruck (DE)
(86) Internationale Anmeldenummer: PCT/EP2012/001531
(87) Internationale Veröffentlichungsnummer: WO 2012/136375

(56) Entgegenhaltungen:
- GB-A- 2 470 772

## Beschreibung

Die Anmeldung betrifft ein Sicherheitselement für einen Datenträger, einen Datenträger mit einem solchen Sicherheitselement, ein Herstellungsverfahren für ein solches Sicherheitselement sowie eine Druckfarbe zum Herstellen einer Farbschicht des Sicherheitselements.

Datenträger, wie Wert- oder Ausweisdokumente, insbesondere Ausweiskarten, Kreditkarten oder Pässe, oder auch andere Wertgegenstände, wie etwa Markenartikel, werden zur Absicherung mit Sicherheitselementen versehen, die eine Überprüfung der Echtheit des Gegenstandes gestatten und die zugleich als Schutz vor unerlaubter Reproduktion dienen. Weiterhin erzeugen Sicherheitselemente häufig einen gut sichtbaren optischen Eindruck, der eine Überprüfung des Sicherheitselements auch ohne technische Hilfsmittel, beispielsweise mit bloßem Auge, gestattet. Ein Sicherheitselement kann in solche Datenträger, beispielsweise in eine Banknote oder in eine Chipkarte, eingebettet oder als selbsttragendes Transferelement ausgebildet sein, beispielsweise als Patch oder als Etikett, das nach seiner Herstellung auf einen zu sichernden Datenträger oder sonstigen Gegenstand aufgebracht wird. Alternativ kann das Sicherheitselement aber auch während der Herstellung in den Datenträger integriert werden.

Datenträger im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, und auch kartenförmige Datenträger, insbesondere Kredit- und Chipkarten, sowie Produktsicherungselemente, wie Etiketten, Siegel, Verpackungen und dergleichen. Der Begriff "Datenträger" umfasst auch Vorstufen, insbesondere nicht umlauffähige Vorstufen solcher Datenträger, die beispielsweise im Fall von Sicherheitspapier in quasi endloser Form vorliegen und zu einem späteren Zeitpunkt weiterverarbeitet werden. Solche Datenträger können Fenster oder Durchsichtsfenster enthalten, die mit einer transparenten Folie abgedeckt sind, welche gegebenenfalls den Träger für ein Sicherheitselement bildet.

Um eine Fälschung oder Nachbildung von Sicherheitselementen, beispielsweise mit hochwertigen Farbfotokopiergeräten, zu verhindern, können solche Sicherheitselemente optisch variable Elemente oder optisch variable Schichten aufweisen, die dem Betrachter unter verschiedenen Beobachtungsbedingungen, beispielsweise unter verschiedenen Betrachtungswinkeln, verschiedene visuelle Eindrücke, beispielsweise verschiedene Farbeindrücke, vermitteln. Im Rahmen der vorliegenden Erfindung wird unter der Formulierung "optisch variabel" oder "optische Variabilität" die Änderung einer von einem Betrachter erfassbaren optischen Eigenschaft eines von dem Betrachter betrachteten Gegenstandes, insbesondere eines betrachteten erfindungsgemäßen Sicherheitselements oder Datenträgers verstanden. Zu den variablen optischen Eigenschaften werden in Übereinstimmung mit den Erläuterungen auf der Internetseite "http://de.wikipedia.org/wiki/Farbs%C3%A4ttigung" insbesondere die vom Menschen als grundlegend empfundene Eigenschaften einer Farbe, nämlich Farbton, Helligkeit und Farbsättigung verstanden. Die Qualität der Farbwirkung auf einen Betrachter eines erfindungsgemäßen Sicherheitselements kann ferner durch die Wertigkeiten, wie Buntheit, Farbigkeit, (Farbintensität), Chromatizität, Farbtiefe, Brillanz und Graustich beschrieben werden. Ferner können die erfindungsgemäßen Sicherheitselemente oder Datenträger auch durch weitere optische Eigenschaften charakterisiert werden, z.B. durch ihr Reflexionsvermögen. Sofern die erfindungsgemäßen Sicherheitselemente oder Datenträger optisch variable Pigmente aufweisen, gilt die vorstehend genannte Definition für die Formulierung "optisch variabel" oder "optische Variabilität" entsprechend auch für diese Effektpigmente.

Zur Erzeugung von Schichten, die solche optisch variablen Effekte zeigen, sind verschiedene Techniken bekannt. Beispielsweise können optische Interferenzschichten entweder vollflächig oder in Pigmentform vorliegen. Solche Interferenzschichten weisen typischerweise einen Dünnschichtaufbau auf, der eine Reflexionsschicht, eine teildurchlässige Schicht und eine oder mehrere dazwischen liegende dielektrische Abstandsschichten umfasst. Diese basieren beispielsweise auf Glimmer, auf SiO₂ oder auf Al₂O₃. Solche Interferenzschichten werden entsprechend der Anzahl von dielektrischen Schichten als ein- oder mehrschichtig bezeichnet. Druckfarben mit Pigmenten solcher Dünnschicht-Interferenzschichten werden beispielsweise unter dem Namen Iriodin^{®} (einschichtig) oder Colorcrypt^{®} (mehrschichtig) von der Firma Merck KGaA vertrieben. Druckfarben mit mehrschichtigen Interferenzschichtpigmenten werden ferner unter dem Namen OVI^{®} oder OVMI^{®} von der Firma SICPA vertrieben, wobei die Pigmente der OVMI^{®} -Druckfarben eine zusätzliche magnetische Schicht im Dünnschichtaufbau aufweisen.

Anstelle von solchen ein- oder mehrschichtigen Interferenzschichtpigmenten können auch cholesterische oder anderweitige Flüssigkristallpigmente verwendet werden. Die Flüssigkristallpigmente liegen beispielsweise als flüssigkristalline Silikonpolymere vor. Solche Flüssigkristallpigmente, insbesondere Flüssigkristallpigmente, die auf Basis von cholesterischen Flüssigkristallen gebildet sind, zeigen insbesondere vor dunklem Hintergrund einen ausgeprägten optisch variablen Effekt in Form eines Farbkippeffektes bei Änderung des Betrachtungswinkels. Neben den beschriebenen Flüssigkristallpigmenten kann eine entsprechend ausgebildete optisch variable Schicht auch dadurch erhalten werden, dass entsprechendes flüssigkristallines Material insbesondere flächig auf ein Substrat aufgebracht und anschließend durch an sich bekannte Maßnahmen vernetzt wird.

Weiterhin zeigen auch Hologramme, welche typischerweise per Vakuumbedampfung hergestellte metallische Schichten umfassen, oder Beugungsgitter unter verschiedenen Betrachtungswinkeln einen unterschiedlichen optischen Eindruck für einen Betrachter.

Die verschiedenen optischen Eindrücke für einen Betrachter umfassen beispielsweise einen sogenannten Farbkippeffekt ("Colorshift"), bei dem für den Betrachter unter verschiedenen Betrachtungswinkeln verschiedene Farbtöne erkennbar sind. Verschiedene optische Eindrücke können auch dadurch entstehen, dass unter einem bestimmten Betrachtungswinkel die optisch variable Schicht vollständig transparent und somit für einen Betrachter unsichtbar ist, während sie unter einem anderen Betrachtungswinkel (Effektwinkel) einen Farbton zeigt. Solche optisch variablen Schichten sind häufig irisierend, das heißt sie zeigen einen Perlglanz, wie er beispielsweise von Muscheln oder Glimmer bekannt ist. Allgemein werden solche bei wechselnder Betrachtungsrichtung einen Farbwechsel zeigende Pigmente als goniochromatische oder optisch variable Pigmente bezeichnet.

Einschichtige Interferenzschichten, Druckfarben mit flüssigkristallinen oder einschichtigen Interferenzschichtpigmenten sind häufig schwach deckend, das heißt unter allen Betrachtungswinkeln stark transluzent, so dass bei Betrachtung einer daraus aufgebauten optisch variablen Schicht der für den Betrachter erkennbare Farbeindruck relativ schwach ist. Solche Effektschichten mit hoher Lichtdurchlässigkeit werden zur Verbesserung der Erkennbarkeit des Farbwechsels daher vorzugsweise in Betrachtungsrichtung vor dunklen oder schwarzen Hintergründen angeordnet. Mehrschichtige Interferenzschichten und Druckfarben mit mehrschichtigen Interferenzschichtpigmenten können dagegen sehr verschiedene Deckungsgrade aufweisen. Sie können stark deckend sein, weisen entsprechend eine geringe Lichtdurchlässigkeit auf oder sind bisweilen sogar vollständig opak. Bei derartigen optisch variablen Schichten mit hohem Deckungsgrad, kann der optisch variable Effekt in der Regel auch ohne einen dunklen oder schwarzen Hintergrund wahrgenommen werden.

Im Sinne der vorliegenden Erfindung weist eine transparente Schicht eine hohe Lichtdurchlässigkeit im gesamten sichtbaren Wellenlängenbereich auf, die vorzugsweise an jeder Stelle des sichtbaren Spektrums mindestens 80 % beträgt, bevorzugt mindestens 90 % beträgt oder im Idealfall 100 % beträgt. Eine solche transparente Schicht ist weiterhin vorzugsweise klar und ermöglicht eine unbeeinträchtigte Beobachtung von in Betrachtungsrichtung hinter der transparenten Schicht liegenden Objekten. Eine transluzente oder semitransparente Schicht vermindert dagegen die Intensität des hindurchtretenden Lichtes für einen Betrachter erkennbar und weist typischerweise eine Lichtdurchlässigkeit zwischen 20 % und 80 % im gesamten sichtbaren Spektrum auf. Eine transluzente oder semitransparente Schicht kann klar oder milchig sein. Dagegen weist eine opake Schicht im gesamten sichtbaren Spektrum eine Lichtdurchlässigkeit von weniger als 20 %, bevorzugt von weniger als 10 % und im Idealfall von 0 % auf. Vorzugsweise weist eine transparente oder transluzente Schicht die gleiche Lichtdurchlässigkeit über den gesamten visuellen Spektralbereich auf, so dass für den Betrachter keine oder eine nur geringfügige farbliche Veränderung von hindurchtretendem Licht erkennbar ist.

Die üblicherweise für Sicherheitselemente verwendeten optisch variablen Farben sind für einen Fälscher nicht leicht verfügbar. Jedoch lassen sich zumindest für einen unbedarften oder unaufmerksamen Betrachter ähnliche Farbeindrücke auch über andere Stoffe, wie sie beispielsweise in Nagellack vorkommen, erzielen. Dabei lassen sich prinzipiell nicht nur einfarbige Aufdrucke aus optisch variablen Farben, sondern auch zwei- und mehrfarbige Aufdrucke nachbilden. GB 2 470 772 A offenbart einen Datenträger, nämlich ein Wertdokument oder ein Ausweisdokument, mit einem Sicherheitselement, wobei das Sicherheitselement ein Substrat (11) mit einem ersten, hellen Bereich und einem davon visuell unterscheidbaren zweiten, dunklen Bereich (12) sowie einer Farbschicht (13), welche den ersten Bereich und den zweiten Bereich des Substrats jeweils teilweise oder vollflächig überdeckt, umfasst, wobei der erste Bereich und der zweite Bereich des Substrats dadurchgebildet sind, dass das Substrat im Bereich des zweiten Bereichs mit einer von einer Substratfarbe visuell unterscheidbaren Untergrundfarbe bedruckt ist und die Farbschicht Effektpigmente eines Typs und ein Farbmittel umfasst. Aufgabe der vorliegenden Erfindung ist es, ein Sicherheitselement vorzuschlagen, in welchem auf einfache Art und Weise ein leicht überprüfbares Sicherheitsmerkmal erzeugt werden kann. Es ist weiterhin Aufgabe der Erfindung einen entsprechenden Datenträger sowie ein Herstellungsverfahren für ein solches Sicherheitselement anzugeben.

Diese Aufgaben werden durch einen Datenträger gemäß Anspruch 1 und ein Herstellungsverfahren gemäß Anspruch 7 gelöst. Die abhängigen Ansprüche betreffen bevorzugte Ausgestaltungen und Weiterbildungen der Erfindung.

Ein erfindungsgemäßes Sicherheitselement des Datenträgers umfasst ein Substrat mit einem ersten Bereich und einem zweiten Bereich. Der erste Bereich ist dabei von dem zweiten Bereich visuell unterscheidbar, insbesondere hinsichtlich Helligkeit und/oder Farbeindruck. Das Sicherheitselement umfasst weiter eine Farbschicht, welche Effektpigmente eines Typs und ein Farbmittel umfasst. Die Farbschicht ist derart auf das Substrat aufgebracht, dass sie den ersten Bereich und den zweiten Bereich jeweils teilweise oder vollflächig überdeckt. Erfindungsgemäß unterscheidet sich der Farbeindruck des mit der Farbschicht überdeckten ersten Bereichs für einen Betrachter von dem Farbeindruck des von der Farbschicht überdeckten zweiten Bereichs. Unterschiedliche Farbeindrücke werden dabei in Draufsicht, unter schräge Betrachtung und/oder unter einem Effektwinkel der Effektpigmente wahrgenommen.

Ein erfindungsgemäßes Verfahren zum Herstellen eines Sicherheitselements umfasst demnach folgende Schritte: Es wird ein Substrat bereitgestellt, welches einen ersten Bereich und einen davon visuell unterscheidbaren zweiten Bereich umfasst. Weiterhin wird eine Druckfarbe bereitgestellt. Diese umfasst Effektpigmente eines Typs und ein Farbmittel. Mittels der Druckfarbe wird auf dem Substrat eine Farbschicht derart gebildet, dass der erste Bereich und der zweite Bereich des Substrats von der Farbschicht jeweils teilweise oder vollflächig überdeckt werden. Das Verfahren zeichnet sich dadurch aus, dass die Effektpigmente und das Farbmittel derart ausgewählt werden, dass sich der Farbeindruck des mit der Farbschicht überdeckten ersten Bereichs deutlich von dem Farbeindruck des von der Farbschicht überdeckten zweiten Bereichs unterscheidet.

Eine nicht-beanspruchte Druckfarbe zur Herstellung eines Sicherheitselements umfasst Effektpigmente eines Typs und ein Farbmittel. Die Druckfarbe ist derart ausgebildet, dass, wenn mittels der Druckfarbe ein Substrat mit einem ersten Bereich und einem davon visuell unterscheidbaren zweiten Bereich bedruckt wird, sich der Farbeindruck des mit der Druckfarbe bedruckten ersten Bereichs von dem Farbeindruck des mit der Druckfarbe bedruckten zweiten Bereichs deutlich unterscheidet.

Das Substrat ist typischerweise flächig, eben und/oder flach ausgebildet. Es kann aus sämtlichen dafür bekannten und geeigneten Materialien gebildet sein, insbesondere aus Papier, wie Baumwollpapier, Karton, Kunststoff oder faserartigen Materialien mit Fasern aus Zellstoff, Baumwolle, Kunststoff, oder Mischungen daraus. Auch andere Materialien sowie Mischungen oder Verbundmaterialien sind möglich, bevorzugt ist insbesondere ein Folien-Papier-Verbund als Substrat für das erfindungsgemäße Sicherheitselement oder den Datenträger.

Der erste Bereich und der zweite Bereich des Substrats, welche an einer Substratoberfläche liegen, sind visuell unterscheidbar. Mit andern Worten erzeugt der erste Bereich bei einem Betrachter einen ersten visuellen Eindruck, während der zweite Bereich bei einem Betrachter einen zweiten visuellen Eindruck erzeugt, der von dem ersten visuellen Eindruck verschieden ist. Im Sinne der vorliegenden Erfindung bedeutet visuell unterscheidbar mit Bezug auf die beiden Bereiche eine mit bloßem Auge wahrnehmbare Unterscheidbarkeit hinsichtlich eines oder mehrerer den visuellen Eindruck betreffender Parameter, wie z.B. die im Zusammenhang mit der optischen Variablilität erwähnten Parameter Helligkeit, Sättigung, Buntheit, Farbton, Chromatizität, Reflexionsvermögen und dergleichen. Besonders bevorzugt unterscheiden sich die beiden Bereiche zumindest darin, dass einer, unabhängig vom jeweiligen Farbton, der jeweiligen Buntheit oder der Sättigung, eher hell erscheint, der andere eher dunkel erscheint. Im einfachsten Fall ist einer der Bereiche sehr hell, erfindungsgemäß weiß, der andere sehr dunkel, erfindungsgemäß schwarz.

Die visuelle Unterscheidbarkeit des erfindungsgemäßen ersten und zweiten Bereichs kann des Weiteren auch quantifiziert werden. Dabei wird auf die auf der Internetseite "http://de.wikipedia.org/wiki/Delta_E" gemachte Erklärung verwiesen, wonach ΔE als ein Maß für den vom Betrachter empfundenen Farbabstand, im Rahmen dieser Erfindung des empfundenen Farbabstands des ersten und zweiten Bereichs, herangezogen wird. Erfindungsgemäß ist die visuelle Unterscheidbarkeit des ersten und des zweiten Bereichs gegeben, wenn die Farbdifferenz ΔE größer 2,0, insbesondere größer 5,0 ist. Eine Farbdifferenz ΔE, die größer 5,0 ist, geht in der Regel mit einer relativ eindeutigen visuellen Unterscheidbarkeit des erfindungsgemäßen ersten und zweiten Bereichs für den Betrachter einher.

Die visuelle Unterscheidbarkeit des erfindungsgemäßen ersten und zweiten Bereichs kann des Weiteren auch über den vom Betrachter wahrgenommenen Helligkeitsunterschied charakterisiert werden. Beispielsweise kann die Helligkeit einer Farbe in dem L*a*b*-Farbraum über den Paramter L charakterisiert werden. Dabei ist der Farbe Weiß ein Wert L*=100 und der Farbe Schwarz der Wert L*=0 zugeordnet (siehe auch die Internetseite "http://de.wikipedia.org/wiki/Lab-Farbraum". Erfindungsgemäß ist die visuelle Unterscheidbarkeit des ersten und des zweiten Bereichs für den Betrachter gegeben, wenn der Helligkeitsunterschied des ersten und des zweiten Bereichs ΔL* > 20, insbesondere ΔL* > 50 ist. Dabei ist allerdings zu bedenken, dass der Helligkeitsunterschied ΔL*, bei dem der Betrachter den erfindungsgemäßen ersten und zweiten Bereich als visuell unterscheidbar ansieht, unter Umständen auch von der Farbe des jeweiligen Bereichs, d.h. den jeweiligen a*- und b*-Wert im L*a*b*-Farbraum abhängt.

Generell ist anzumerken, dass neben dem hier diskutierten L*a*b*-Farbraum eine Beschreibung der optischen Eigenschaften, insbesondere des Farbtons und der Helligkeit des erfindungsgemäßen ersten und zweiten Bereichs bzw. der den ersten und zweiten Bereich überdeckenden Farbschicht, auch in einem anderen Farbraum, z.B. dem RGB- oder CMY-Farbraum erfolgen kann.

Immer dann, wenn im Rahmen der vorliegenden Erfindung die Begriffe "Farbeindruck", "Farbe" oder "Eigenfarbe" verwendet werden, ist damit, wenn sich nicht aus dem Zusammenhang eindeutig etwas anderes ergibt, der für den Betrachter wahrnehmbare farbliche, beispielsweise buntfarbliche Anteil des visuellen Eindrucks gemeint, also beispielsweise "Rot" oder "Blau". Im Sinne der vorliegenden Erfindung bezeichnet ein unterschiedlicher Farbeindruck oder eine unterschiedliche Farbe oder Eigenfarbe, einen von einem Betrachter, vorzugsweise mit bloßem Auge wahrgenommenen, visuellen Eindruck, welcher sich von einem anderen visuellen Eindruck nicht nur hinsichtlich Helligkeit oder Sättigung einer wahrgenommenen Farbe, sondern beispielsweise auch hinsichtlich eines Parameters, wie Farbton und/oder Chromatizität, unterscheidet. D.h. die erfindungsgemäß unterschiedlichen Farbeindrücke beziehen sich auf verschiedene Farben in dem Sinne, dass nicht die gemäß dem einen Farbeindruck wahrgenommene Farbe des mit der Farbschicht überdeckten ersten Bereichs des Substrats lediglich heller oder dunkler und/ oder mehr oder weniger gesättigt erscheint oder wahrgenommen wird als die gemäß dem davon unterschiedlichen Farbeindruck wahrgenommene andere Farbe des mit der Farbschicht überdeckten zweiten Bereichs des Substrats. Unterschiedliche Farbeindrucke werden beispielsweise mit "vorwiegend Blau" im Unterschied zu "vorwiegend Grün" oder "vorwiegend Gelb" im Unterschied zu "vorwiegend Grün" benannt. Zur weiteren Charakterisierung der Begriffe "Farbeindruck", "Farbe" oder "Eigenfarbe" sowie der Begriffe "unterschiedlicher Farbeindruck", "unterschiedliche Farbe" oder "unterschiedliche Eigenfarbe" wird im Weiteren entsprechend der Erläuterungen zur visuellen Unterscheidbarkeit weiter oben auf den Farbabstand ΔE zurückgegriffen (siehe "http://wikipedia.org/wiki/Delta_E"). Erfindungsgemäß nimmt der Betrachter bei Betrachtung der Farbschicht 50 einen Farbeindruck des mit der Farbschicht überdeckten ersten Bereichs wahr, der sich von dem Farbeindruck des von der Farbschicht überdeckten zweiten Bereichs unterscheidet, wobei der Unterschied der Farbeindrücke ΔE > 2,0, bevorzugt ΔE > 5,0 ist. Bei einem Unterschied ΔE > 5,0 handelt es sich um einen so wesentlichen Farbunterschied, dass im Wesentlichen alle Betrachter für den mit der Farbschicht überdeckten ersten Bereich bzw. zweiten Bereich eine unterschiedliche Farbe wahrnehmen.

Die visuell wahrnehmbaren Farben von erstem und zweitem Bereich des Substrats werden im Folgenden auch als Untergrundfarben bezeichnet, im Falle eines hellen bzw. dunklen ersten bzw. zweiten Bereichs entsprechend als heller bzw. dunkler Untergrund.

Im Rahmen der vorliegenden Erfindung wird ein stoffliches Erzeugnis, welches einen visuellen Eindruck oder einen Farbeindruck bei einem Betrachter erzeugt, oder seine Erscheinungsform oder ein Bestandteil davon, beispielsweise als Druckfarbe, Farbschicht, Pigment oder Pigmenttyp, Farbstoff oder Farbmittel bezeichnet. Ein Farbmittel im Sinne der vorliegenden Erfindung ist ein farbgebender Stoff, der nicht farblos ist, das heißt insbesondere einen von weiß verschiedenen Farbeindruck erzeugt. Darunter fallen Pigmente als im Anwendungsmedium unlösliche Farbmittel sowie Farbstoffe als im Anwendungsmedium lösliche Farbmittel. Bevorzugt werden organische, anorganische und/oder stark absorbierende Farbmittel eingesetzt. Die vorstehend genannten erfindungsgemäßen Farbstoffe zeigen in der Regel kein bzw. im Wesentlichen kein optisch variables Verhalten, so dass der Betrachter dieser Farbmittel, z.B. unter unterschiedlichen Betrachtungswinkeln, den gleichen oder im Wesentlichen den gleichen Farbton wahrnimmt.

Es versteht sich, dass die visuelle Unterscheidbarkeit der beiden Bereiche des Substrats in demjenigen Zustand vorliegt und beurteilt wird, bevor die Farbschicht jeweils teilweise oder vollflächig auf die Bereiche aufgebracht wird. Im Sinne der Erfindung beruht die visuelle Unterscheidbarkeit der beiden Bereiche des Substrats vorzugsweise nicht auf anderen, ebenfalls möglicherweise visuell erkennbaren Merkmalen, wie z.B. einer unterschiedlichen dreidimensionalen Struktur, einer unterschiedlichen Textur oder dergleichen.

Effektpigmente im Sinne der vorliegenden Erfindung sind die in der Einleitung genannten Pigmente, mit deren Hilfe die dort beschriebenen optisch variablen Effekte erzielt werden können. Insbesondere sind zu den Effektpigmenten somit Interferenzpigmente und cholesterische oder anderweitige Flüssigkristallpigmente zu zählen. Bevorzugt werden transluzente Effektpigmente, wie Iriodin^{®}-, Colorcrypt^{®}- oder Flüssigkristallpigmente verwendet. Erfindungsgemäß umfasst die Farbschicht sowie gegebenenfalls die Druckfarbe, aus der die Farbschicht aufgebaut ist, wenigstens einen Typ, das heißt wenigstens eine Art von Effektpigmenten. Die Farbschicht kann genau einen Typ von Effektpigmenten oder mehrere verschiedene Effektpigmente, das heißt mehrere Effektpigmenttypen umfassen. Beispielsweise kann eine Mischung eines ersten, im Wesentlichen nicht deckenden Effektpigments, z.B. eines Interferenzpigmentes, insbesondere eines Iriodin^{®}-, Colorcrypt^{®}- oder Flüssigkristallpigments, mit einem zweiten, zumindest leicht deckenden Effektpigments, insbesondere eines OVI^{®}-Pigments, mit Vorteil für die Farbschicht eingesetzt werden. Ebenso kann die Farbschicht genau ein Farbmittel oder mehrere Farbmittel umfassen.

Grundsätzlich wird erfindungsgemäß ausgenutzt, dass Effektpigmente, wie bereits erwähnt, vor einem eher dunklen Untergrund anders wahrgenommen werden als vor einem eher hellen Untergrund. Dies gilt insbesondere für transluzente Effektpigmente, wie die meisten Colorcrypt-, Iriodin- oder Flüssigkristallpigmente. Der Effekt kann aber auch mittels opaker Effektpigmente erreicht werden, insbesondere wenn diese geeignet verdünnt in einer dann transluzenten Farbschicht vorliegen. Auf dunklem, beispielsweise schwarzem Untergrund wird der von den Effektpigmenten transmittierte Anteil des Lichts vom Untergrund im Wesentlichen vollständig absorbiert, ebenso wie auch das restliche, durch die die Effektpigmente enthaltende Schicht, im einfachsten Fall unverändert, hindurchtretende Licht. Dadurch kann vom Betrachter die typischerweise schwache Eigenfarbe des Effektpigments wahrgenommen werden, welche durch den von dem Effektpigment vorwiegend reflektierten Anteil des Lichts bestimmt wird. Im Falle eines hellen, beispielsweise weißen Untergrundes wird dagegen auch das transmittierende Licht von dem hellen Untergrund fast vollständig wieder reflektiert, so dass die Eigenfarbe des Effektpigments praktisch kaum wahrgenommen werden kann. Zudem wird auch das restliche, durch die die Effektpigmente enthaltende Schicht, im einfachsten Fall unverändert, hindurchtretende Licht zurückgeworfen und überlagert dann den schwachen Farbeindruck der Effektpigmente.

Da erfindungsgemäß der die Effektpigmente enthaltenden Farbschicht ein vorzugsweise stark absorbierendes Farbmittel beigemischt wird, erscheint auf vorwiegend hellem Untergrund, welcher vorzugsweise einem der beiden Bereiche des Substrats entspricht, im Farbgemisch, das heißt der resultierenden Farbe, der Farbschicht nun vorwiegend die dem Farbmittel entsprechende Farbe. Die Farbe des Effektpigments tritt dabei merklich bis vollständig in den Hintergrund. Abhängig von der Art des Effektpigments kann dabei allerdings ein leichter Sparkling- oder Glitzer-Effekt hinzutreten. Abhängig von der Farbe des dunklen Untergrunds, welcher dem anderen der beiden Bereiche des Substrats entspricht, und der Farbe des Farbmittels kann der Farbeindruck dieses von der Farbschicht überdeckten Bereichs, neben der Eigenfarbe des Interferenzpigments auch noch von der Farbe des Farbmittels bestimmt sein. In jedem Fall unterscheidet sich der Farbeindruck des mit der Farbschicht überdeckten ersten Bereichs von dem Farbeindruck des von der Farbschicht überdeckten zweiten Bereichs deutlich wahrnehmbar. Dieser Effekt ist nicht lediglich unter einen vorgegebenen, spezifischen Blickwinkel zu erkennen, sondern vorzugsweise aus jedem beliebigen Blickwinkel wahrnehmbar, insbesondere sowohl bei senkrechter Betrachtung, im Folgenden auch als Draufsicht bezeichnet, als auch bei schräger Betrachtung, beispielsweise unter einem Effektwinkel.

Um die vorstehenden Effekte zu erhalten, ist die Farbschicht mit einer solchen Schichtdicke auf das Substrat aufgebracht, dass die Farbschicht zumindest noch transluzent ist. Eine vollständig deckende Farbschicht, das heißt eine Farbschicht, hinter der die verschiedenen Bereiche des Substrats nicht mehr wahrgenommen werden können, würde den erfindungsgemäßen Effekt mindern oder ganz verhindern.

Der erfindungsgemäße Effekt kann dadurch verstärkt werden, dass im Rahmen der Herstellung der Druckfarbe bzw. des Sicherheitselements die Effektpigmente und das Farbmittel derart ausgewählt werden, dass die Farbe der Farbschicht, das heißt die der Farbschicht zugrunde liegende Mischfarbe, hinsichtlich ihres Farbtons, ihrer Helligkeit und ihrer Farbsättigung auf die Farben der beiden Bereiche des Substrats geeignet abgestimmt wird. Beispielsweise sind die Farbe der Farbschicht und die Farbe eines der beiden Bereiche des Substrats zueinander komplementär. Insbesondere ist eine solche Abstimmung des Farbtons des dunkleren der beiden Bereiche mit dem Farbton der Farbschicht, und darin im Wesentlichen mit dem Farbton des Farbmittels, vorteilhaft.

Weiter ist zu beachten, dass die Farbschicht mittels einer Druckfarbe gebildet wird, welche ihrerseits durch eine Mischung von Effektpigmenten mit einem Farbmittel hergestellt wird. Die Farbe der Farbschicht sowie der der Farbschicht zugrunde liegenden Druckfarbe ergibt sich dabei als Mischfarbe aus der Farbe des Effektpigments und der Farbe des Farbmittels, welche sich üblicherweise entsprechend den Gesetzmäßigkeiten der subtraktiven Farbmischung ergibt.

Gemäß einer klassischen Farbenlehre nach Johannes Itten ergibt beispielsweise die Mischung zweier Sekundärfarben, welche im Farbkreis in direkter Nachbarschaft zu einer Primärfarbe angeordnet sind, diese Primärfarbe, und die Mischung zweier Primärfarben eine Sekundärfarbe.

Gemäß einer anderen klassischen Farblehre nach Goethe ergibt sich z.B. bei der Mischung zweier Primärfarben eine Sekundärfarbe und bei Mischung einer Primärfarbe mit einer Sekundärfarbe eine sogenannte Tertiärfarbe. Weitere Einzelheiten zu den Gesetzmäßigkeiten der hier diskutierten Farblehren sind dem Fachmann bekannt.

Anzumerken ist an dieser Stelle, dass das Farbmittel im Rahmen der vorliegenden Erfindung nicht zur Abmischung oder Einstellung eines Farbtons der Effektpigmente, sondern, wie beschrieben, zum Erreichen des erfindungsgemäßes Effekts der jeweils unterschiedlich wahrgenommenen Farbeindrücke der mittels der Farbschicht überdeckten Bereiche des Substrats dient. Dass das Farbmittel im Rahmen der vorliegenden Erfindung nicht zur Abmischung oder Einstellung eines Farbtons der Effektpigmente dient, ergibt sich auch aus der Tatsache, dass sich der Farbton des Farbmittels und des Effektpigmentes in der erfindungsgemäßen Farbschicht bevorzugt voneinander unterscheiden.

Beispielhafte, konkrete Farbschichtrezepturen werden nachstehend detailliert angegeben.

Grundsätzlich können somit beispielsweise folgende Effekte erzielt werden:
Sind die den beiden Bereichen des Substrats entsprechenden Untergründe von einer sehr hellen Farbe, erfindungsgemäß weiß, und einer sehr dunklen Farbe, erfindungsgemäß Schwarz, so können im Wesentlichen drei Fälle eintreten: Im ersten Fall erscheint die Farbschicht vor dem dunklen Untergrund in einer Mischfarbe, deren Farbeindruck durch die Farbe des Effektpigments und die Farbe des Farbmittels bestimmt ist, während die Farbschicht vor dem hellen Untergrund im Wesentlichen in der Farbe des Farbmittels wahrgenommen wird. Im zweiten Fall erscheint die Farbschicht vor dem dunklen Untergrund im Wesentlichen in der Farbe des Effektpigments, vor dem hellen Untergrund als Mischfarbe, deren Farbeindruck auch hier durch die Farbe des Effektpigments und die Farbe des Farbmittels bestimmt wird. Im dritten Fall schließlich erscheint die Farbschicht vor dem dunklen Untergrund erneut im Wesentlichen in der Farbe des Effektpigments, während ihr Farbeindruck vor dem hellen Untergrund im Wesentlichen durch die Farbe des Farbmittels bestimmt ist.

Ist einer der beiden Bereiche des Substrats sehr hell, z.B. wieder weiß, der andere hingegen dunkler, aber nun farbig und nicht schwarz, was nicht beansprucht wird aber das Verständnis der Erfindung erleichtert, so kann die farbige Untergrundfarbe des anderen Bereichs dort, wo die Farbschicht aufgetragen ist, aufgrund des Farbmittelanteils in der Farbschicht sehr dunkel, z.B. grau, braun oder gar fast schwarz, erscheinen. Dies gilt insbesondere dann, wenn die Farbe des Bereichs des Substrats und die Farbe des Farbmittels im Wesentlichen komplementär zueinander sind. In diesem Fall erscheint dann die Farbschicht als Ganzes vor den beiden den Bereichen entsprechenden Untergründen, wie vorstehend im Zusammenhang mit dem sehr hellen und dem sehr dunklen Untergrund beschrieben.

Wird schließlich erneut angenommen, dass einer der beiden Bereiche sehr hell ist, der andere erneut dunkler und farbig, so können weiterhin die folgenden Fälle eintreten: Vor dem farbigen Untergrund erscheint die Farbschicht in einer Mischfarbe, deren Farbeindruck durch die Farbe des Untergrunds und die Farbe des Farbmittels bestimmt ist. Hier allerdings mischt sich diese Farbe nicht, wie im vorhergehenden Fall, zu einer im Wesentlichen unbunten, das heißt farblosen Farbe, sondern zu einer bunten, das heißt farbbehafteten Mischfarbe. Vor dem hellen Untergrund kann die Farbschicht dann in der Farbe des Farbmittels oder in einer Mischfarbe erscheinen, deren Farbeindruck durch die Farbe des Farbmittels und die Farbe des Effektpigments bestimmt ist. Schließlich kann die Farbschicht vor dem dunklen Untergrund als Mischfarbe erscheinen, deren Farbeindruck durch die Farbe des Effektpigments und die Farbe des Untergrunds bestimmt wird, während die Farbschicht vor dem hellen Untergrund erneut in der Farbe des Farbmittels oder in einer Mischfarbe erscheinen kann, deren Farbeindruck durch die Farbe des Farbmittels und die Farbe des Effektpigments bestimmt ist.

Wie erwähnt, werden gemäß einer bevorzugten Ausführungsform der Erfindung als Effektpigmente Interferenzpigmente verwendet. Dünnschicht-Interferenzpigmente, wie sie in den vorstehend genannten Druckfarben (Iriodin^{®} (einschichtig) oder Colorcrypt^{®} (mehrschichtig) von der Firma Merck KGaA verwendet werden, sind hier gleichfalls einsetzbar. Bei den von Merck KGaA erhältlichen Iriodin^{®}-Pigmenten handelt es sich in der Regel um Pigmente mit einem Kern aus Glimmer, der eine Interferenzschicht, insbesondere aus Titandichlorid, Eisenchlorid oder aus einer Kombination von Titandichlorid und Eisenchlorid, aufweist. Die Schichtdicken der Interferenzschicht werden dabei so gewählt, dass sie im Wellenlängenbereich der gewünschten Farbe (1. Ordnung) oder bei einem Mehrfachen der gewünschten Wellenlänge (2., 3., 4., usw. Ordnung) liegen. Im Allgemeinen sind Pigmente mit einer Interferenzschichtdicke im Bereich des Mehrfachen der gewünschten Wellenlänge, häufig auch als "Pigmente höherer Ordnung" bezeichnet, farbstärker als sogenannte "Pigmente 1. Ordnung" und weisen einen höheren Deckungsgrad und eine geringere Lichtdurchlässigkeit auf. Der Betrachter kann in der Regel nur unter einem bestimmten Betrachtungswinkel eine einzige charakteristische Farbe wahrnehmen. Bei den von Merck KGaA erhältlichen Colorcrypt^{®}-Pigmenten handelt es sich in der Regel um Pigmente mit einem Kern aus Siliziumoxid, der eine Interferenzschicht aufweist, die mehrere Schichten, insbesondere Zwischenschichten, umfasst. Je nach Schichtdicke der einzelnen Schichten nimmt der Betrachter so unter unterschiedlichen Betrachtungswinkeln unterschiedliche Farben wahr, allerdings nur in einem verhältnismäßig engen Wellenlängenbereich um eine bestimmte Schwerpunktwellenlänge (Effektfarbe).

Auch mehrschichtige Interferenzschichtpigmente, wie beispielsweise unter dem Namen OVI^{®} oder OVMI^{®} von der Firma SICPA vertrieben, können eingesetzt werden. Diese weisen im Unterschied zu den vorgenannten in einem verhältnismäßig breiten Wellenlängenbereich einen betrachtungswinkelabhängigen Farbkippeffekt auf.

Alternativ zu den genannten Interferenzpigmenten können auch cholesterische oder anderweitige Flüssigkristalle oder Flüssigkristallpigmente verwendet werden. Diese liegen beispielsweise als flüssigkristalline Silikonpolymere, insbesondere in Form von Pigmenten aus cholesterischem Flüssigkristallmaterial vor oder auch als Pigmente aus anderen organischen Polymeren mit flüssigkristalliner Struktur.

Dabei weisen einschichtige Interferenzschichten, Iriodin^{®}- und Colorcrypt^{®}-Farben von Merck KGaA sowie Farben mit cholesterischen Flüssigkristallpigmenten unter allen Betrachtungswinkeln eine hohe Lichtdurchlässigkeit auf. In Draufsicht sind sie häufig vollständig transparent, zeigen bei Betrachtung unter einem vorgegebenen Effektwinkel trotz ihrer Transluzenz jedoch einen intensiven Farbton, insbesondere vor einem dunklen oder schwarzen Hintergrund. Insofern erweisen sich solche Effektpigmente, wie vorstehend detailliert beschrieben, als besonders vorteilhaft.

Hinsichtlich der Partikelgröße erweisen sich solche Effektpigmente als vorteilhaft, deren Partikel einen Durchmesser zwischen ca. 5 µm und ca. 125 µm aufweisen. Der Partikeldurchmesser beeinflusst das von dem Effektpigment erzeugte Glanzverhalten. Bei einem Durchmesser von 5 µm bis 25 µm wird bei einem eher hohen Deckungsvermögen ein seidiger Glanz erreicht. Partikeldurchmesser im Bereich von ca. 10 µm bis 60 µm ergeben ein mittleres Deckungsvermögen und einen typischen Perlglanz. Partikeldurchmesser im Bereich von ca. 10 µm bis 125 µm schließlich liefern eher geringes Deckungsvermögen und einen Glitzereffekt. Die vorteilhaftesten Effekte werden mit den mittleren Partikelgrößen mit einem Durchmesser von ca. 10 µm bis 60 µm erreicht, da diese auf hellem Untergrund ausreichend transparent, auf dunklem Untergrund hinreichend deckend sind. Der Kern sowie die Beschichtung der verwendeten Effektpigmente sollten möglichst transparent oder semitransparent sein. Semitransparenz wird beispielsweise mittels folgender Materialien erreicht: Glimmer/TiO₂/organisches Pigment; Glimmer/Fe₂O₃; Fe₂O₃/SiO₂/Fe₂O₃; SiO₂/Fe₂O₃; Polyesterfilmzuschnitte. Transparenz liefern beispielsweise folgende Materialien: Flüssigkristalle; SiO₂/TiO₂.

Als Farbmittel können, wie erwähnt, Pigmente oder lösliche Farbstoffe verwendet werden. Vorzugsweise werden eher stärker absorbierende Farbmittel verwendet, beispielsweise klassische transparente oder semitransparente organische Buntpigmente, wie z.B. Blue 15:3, Red 122, Yellow 81 oder 13, Green 7, Violet 21 oder Orange 10 oder 43 (gemäß Colorindex). Es ist auch denkbar, dass das Farbmittel Bestandteil der Effektpigmente ist.

Zum Erreichen des erfindungsgemäßen Effekts ist es ausreichend, wenn die Farbschicht jeweils vollflächig auf den ersten Bereich und den zweiten Bereich des Substrats aufgebracht wird. Dies vereinfacht die Herstellung des Sicherheitselements. Trotzdem können mittels eines derart einfachen vollflächigen Farbauftrags, wie nachstehend detailliert beschrieben, komplexe, leicht erkennbare, aber schwer nachzuahmende Effekte erzielt werden. Gleichfalls ist es möglich, dass die Farbschicht - zumindest bereichsweise - nicht vollflächig, sondern in Form eines Motivs oder Musters aufgebracht, beispielsweise aufgedruckt wird. Auch derart bedruckte Bereiche zeigen den erfindungsgemäßen Effekt.

Vorzugsweise wird die Farbschicht auf das Substrat aufgedruckt. Verschiedene bekannte Druckverfahren können dazu verwendet werden, beispielsweise Tiefdruck, Stichtiefdruck, Flexodruck oder Siebdruck. Die zum Herstellen der Farbschicht verwendete Druckfarbe ist dabei vorzugsweise an das ausgewählte Druckverfahren angepasst.

Wie erwähnt, ist der erste Bereich des Substrats hell, erfindungsgemäß weiß, ausgebildet, der zweite Bereich dunkel, erfindungsgemäß schwarz. Auf diese Weise ist die erforderliche visuelle Unterscheidbarkeit der beiden Bereiche in jedem Fall gewährleistet. Gleichzeitig kann der erfindungsgemäße Effekt hier aus den beschriebenen Gründen besonders gut wahrgenommen werden. Visuell unterscheidbare erste und zweite Bereiche können auf einfache Weise dadurch gebildet werden, dass das Substrat im Bereich des zweiten Bereichs mit einer von einer hellen Substratfarbe (erfindungsgemäß weiß) visuell unterscheidbaren dunklen Untergrunddruckfarbe (erfindungsgemäß schwarz) wird. Der unbedruckte Bereich des Substrats oder ein Teil davon bildet dann den ersten Bereich.

Vorzugsweise grenzt der erste Bereich direkt an den zweiten Bereich an. Mit den beschriebenen Aufdrucken des zweiten Bereichs auf ein an sich einfarbiges Substrat kann dies beispielsweise sehr einfach erreicht werden. Dabei grenzen allgemein der erste Bereich und der zweite Bereich derart aneinander, dass sich aufgrund der visuellen Unterscheidbarkeit der beiden Bereiche im Grenzbereich durch die Grenzlinie der beiden Bereiche ein Muster oder Motiv ergibt. Das Muster kann Informationen tragen, indem beispielsweise der zweite Bereich in Form von Ziffern, d.h. Zahlen und/ oder Buchstaben, oder anderen Codierungen, beispielsweise als Barcode oder dergleichen, auf das Substrat aufgebracht wird. Es können insbesondere komplexe, d.h. sehr feine und hochaufgelöste Muster oder Mikrostrukturen vorgesehen sein.

Zum Bilden solcher komplexen Muster und Strukturen können spezielle Druckverfahren eingesetzt werden.

In diesem Zusammenhang wird ein weiterer Vorteil der vorliegenden Erfindung deutlich. Mittels Druckfarben, welche Effektpigmente umfassen, können mit vielen gängigen Druckverfahren Motive nur bis zu einer Feinheit hergestellt werden, welche durch die Größe der Effektpigmente beschränkt ist. Ein Überdrucken eines solch feinen Motivs im Grenzbereich des ersten und zweiten Bereichs des Substrats mit der Farbschicht auf Basis der erfindungsgemäßen Druckfarbe bewirkt nun zum einen, dass das fein strukturierte Motiv, dessen Struktur oder Auflösung feiner sein kann als die Effektpigmentpartikelgröße, mit dem optisch variablen Effekt erscheint, beispielsweise einem Glanzeffekt, welcher von dem Effektpigment in der Farbmischung herrührt.

Zum anderen kann erfindungsgemäß zusätzlich sogar ein mehrfarbiger Effekt erreicht werden, indem das feine Motiv im ersten Bereich mit einem ersten Farbeindruck wahrgenommen wird, welcher sich von dem zweiten Farbeindruck, in dem der zweite Bereich wahrgenommen wird, wie beschrieben unterscheidet. Damit ist es möglich, ein Sicherheitselement zu bilden, welches ein sehr fein aufgelöstes Motiv in mehrfarbigem Erscheinungsbild zeigt, zusätzlich im Bereich des gesamten Motivs, also für beide Farbeindrücke, einen optisch variablen Effekt zeigt. Es wird damit auf sehr einfache Weise das technische Problem des passergenauen, mehrfarbigen Druckens eines solchen Motivs mit optisch variablem Effekt gelöst. Das passergenaue, mehrfarbige Drucken eines feinen Motivs gemäß der vorliegenden Erfindung ist selbstverständlich auch mit Effektpigmenten möglich, die keinen oder nur einen geringen optisch variablen Effekt zeigen. Denn die Mehrfarbigkeit zu deren Erreichen bisher mehrere Druckvorgänge notwendig waren, welche kaum mit der erforderlichen Passergenauigkeit ausführbar waren, wird erfindungsgemäß durch die Zusammensetzung und Wirkung der Druckfarbe auf den visuell unterscheidbaren Bereichen des Substrats erreicht.

Zusätzlich zu dem ersten und dem zweiten Bereich kann das Substrat zumindest einen weiteren Bereich umfassen. Dieser unterscheidet sich visuell von dem ersten Bereich und dem zweiten Bereich und, sofern vorhanden, von jedem anderen weiteren Bereich. Auch der zumindest eine weitere Bereich ist von der Farbschicht teilweise oder vollflächig überdeckt. Auf diese Weise lässt sich der beschriebene Effekt der Mehrfarbigkeit noch steigern, indem der erste Bereich, der zweite Bereich und jeder der weiteren Bereiche dort, wo der jeweilige Bereich von der Farbschicht überdeckt ist, dem Betrachter jeweils unter einen anderen Farbeindruck erscheint. Es kann auf diese Weise beispielsweise der Eindruck eines stufenweisen Farbübergangs im Sicherheitselement hervorgerufen werden. Dazu ist es lediglich erforderlich, dass die Bereiche des Substrats aneinandergrenzen und stufenweise, beispielsweise von Weiß über verschiedene Graustufen nach Schwarz, ineinander übergehen. Die verschiedenen Graustufen sind beispielsweise durch eine entsprechende Rasterung, beispielsweise mittels Linien-, Punkt- oder frequenzmodulierter Raster darstellbar. Werden diese Bereiche vollflächig mit einer erfindungsgemäßen Druckfarbe überdeckt, erscheint dem Betrachter ein Übergang von einer ersten Farbe zu einer zweiten Farbe.

Neben dem vorstehend beschriebenen zumindest einen weiteren Bereich, der sich visuell von dem ersten und dem zweiten Bereich unterscheidet, ist es grundsätzlich auch denkbar, dass die erfindungsgemäße Farbschicht mehrere, insbesondere verschiedenfarbige Teilbereiche aufweist. In entsprechender Weise kann die erfindungsgemäße Farbschicht neben dem Effektpigment eines Typs auch noch Effektpigmente eines anderen Typs und neben dem einen Farbmittel auch noch weitere, insbesondere verschiedenfarbige Farbmittel umfassen. Im Allgemeinen wird durch die Vorsehung einer Vielzahl von weiteren Bereichen im Untergrund, einer Vielzahl von Bereichen der Farbschicht oder einer Vielzahl von Effektpigmenten oder Farbmitteln die Komplexität des erfindungsgemäßen Sicherheitselements und damit der Fälschungsschutz erheblich gesteigert.

Eine Kombination eines solchen Effekts mit einem vorstehend beschriebenen feinen Motiv, welches im Grenzbereich der einzelnen, visuell unterscheidbaren Bereiche des Substrats gebildet wird, ermöglicht auf vergleichsweise einfache Art das Herstellen sehr komplexer und kaum nachahmbarer Sicherheitselemente.

Die Erfindung wird im Folgenden mit Bezug auf die beiliegenden Zeichnungen beispielhaft beschrieben. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen. Im Einzelnen zeigen die Figuren:
Fig. 1 eine erfindungsgemäße Banknote mit einer ersten bevorzugten Ausführungsform eines erfindungsgemäßen Sicherheitselements;
Fig. 2A das Sicherheitselement aus Fig.1 im Querschnitt;
Fig. 2B das Sicherheitselement aus Fig. 2A in Draufsicht;
Fig. 3 eine zweite bevorzugte Ausführungsform eines erfindungsgemäßen Sicherheitselements in Draufsicht; und
Fig. 4 eine dritte bevorzugte Ausführungsform eines erfindungsgemäßen Sicherheitselements in Draufsicht.

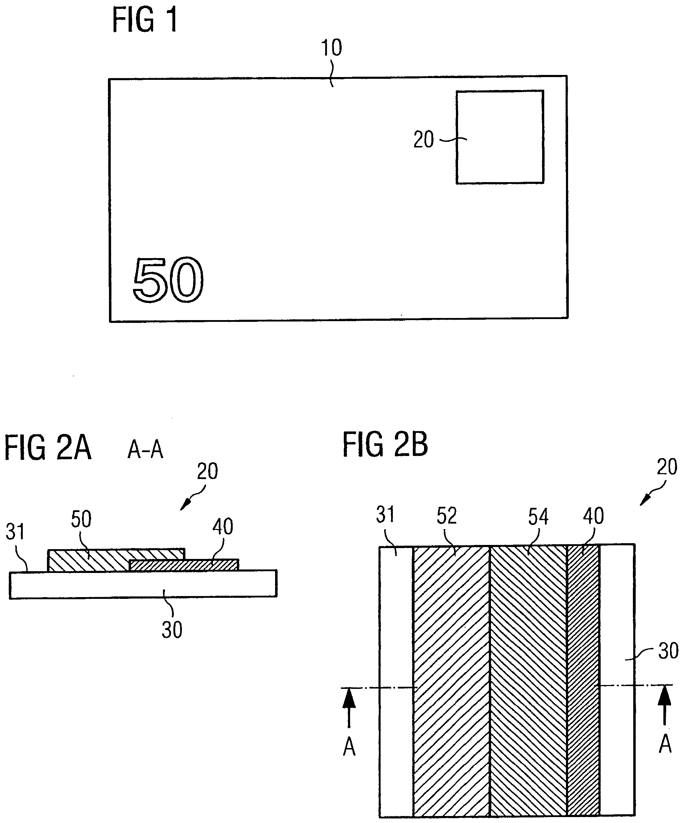

Fig.1 zeigt einen Datenträger 10 in Form einer Banknote, wobei auf dem Datenträger ein Sicherheitselement 20 angeordnet ist. Es ist auch möglich, das Sicherheitselement 20 vor einen transparenten oder transluzenten Fensterbereich (nicht gezeigt) des Datenträgers 10 anzuordnen. Auf diese Weise zusätzlich erzielbare Effekte und Vorteile werden nachstehend mit Bezug auf die Fig. 5A, 5B und 5C beschrieben.

Die Figuren 2A und 2B zeigen das Sicherheitselement 20 in Draufsicht (Fig. 2B) und im Querschnitt (Fig. 2A; entlang der Linie A-A in Fig. 2B). Mit Bezug auf Fig. 2A umfasst das Sicherheitselement 20 ein Substrat 30. Die Substratoberfläche bildet einen ersten Bereich 31 auf dem Substrat 30. Der Farbeindruck des ersten Bereichs 31 wird durch die Eigenfarbe des Substrats 30 be-Das Substrat ist von einer hellen Farbe, erfindungsgemäß Weiß. Auf der Substratoberfläche ist ein zweiter Bereich 40 dadurch gebildet, dass die Substratoberfläche bereichsweise mittels einer dunklen Untergrundfarbe (erfindungsgemäß schwarz) bedruckt ist. Der erste Bereich 31 und der zweite Bereich 40 sind visuell unterscheidbar, vorzugsweise insbesondere aufgrund der unterschiedlichen Helligkeit des ersten Bereichs 31 im Vergleich zum zweiten Bereich 40. Die visuelle Unterscheidbarkeit kann aber zusätzlich auch auf weiteren visuell wahrnehmbaren Parametern beruhen, beispielsweise einer unterschiedlichen Farbsättigung, eines unterschiedlichen Reflexionsvermögens oder eines unterschiedlichen Farbtons, welche der Betrachter mit Bezug auf den ersten Bereich 31 und zweiten Bereich 40 jeweils wahrnimmt.

Weiterhin umfasst das Sicherheitselement 20 eine Farbschicht 50. Diese überdeckt in der gezeigten Ausführungsform den ersten Bereich 31 und den zweiten Bereich 40 jeweils bereichsweise vollflächig. Die Farbschicht 50 umfasst Effektpigmente und ein Farbmittel. Die Farbe der zum Bilden der Farbschicht 50 verwendeten Druckfarbe erscheint als Mischfarbe der Eigenfarbe des Effektpigments und der Eigenfarbe des Farbmittels. Dabei gelten die Gesetze der subtraktiven Farbmischung. Effektpigmente und Farbmittel sind dabei derart ausgewählt, dass, wenn mittels der Druckfarbe das Substrat 30, wie in Fig. 2A gezeigt, bedruckt wird, sich der Farbeindruck 52 des mit der Druckfarbe bedruckten ersten Bereichs 31 von dem Farbeindruck 54 des mit der Druckfarbe bedruckten zweiten Bereichs 40 deutlich wahrnehmbar unterscheidet, wie dies mit Bezug auf Fig. 2B veranschaulicht ist. Vor dem hellen Untergrund 31 des Substrats, welches gleichzeitig den ersten Bereich 31 bildet, erscheint die Farbschicht einem Betrachter in Draufsicht gemäß einem ersten Farbeindruck 52. Vor dem dunklen, zweiten Bereich 40 erscheint die Farbschicht hingegen gemäß einem zweiten Farbeindruck 54, der sich von dem ersten Farbeindruck 52 deutlich unterscheidet. Neben eventuellen Unterschieden hinsichtlich Helligkeit und/oder Farbsättigung beruht der jeweils unterschiedliche Farbeindruck 52,54 vor allem auf einem unterschiedlich wahrgenommenen Farbton.

Je nach Art des ersten Bereichs 31 und des zweiten Bereichs 40 sowie abhängig von der zum Bilden der Farbschicht 50 verwendeten Druckfarbe, kann der beschriebene Effekt unterschiedlich beobachtet werden. Insbesondere die zum Herstellen der Druckfarbe verwendeten Effektpigmente sowie das beigemischte Farbmittel bestimmen die unterschiedlichen Farbeindrücke 52, 54 maßgeblich.

Grundsätzlich setzt sich die Druckfarbe aus ca. 15 Gew.-% bis 25 Gew.-% Effektpigmenten und mindestens 5 Gew.-% Farbmittel zusammen. Weitere nachstehend beschriebene Komponenten können in veränderlichen Anteilen zusätzlich beigemischt werden. Ein geeignetes Bindemittel komplettiert die Mischung. Beispielhafte Rezepturen für verschiedene Druckfarben werden im Folgenden zusammen mit den damit erzielbaren Effekten detailliert beschrieben. Der Effekt beruht, wie erwähnt, auch auf der Abstimmung der Druckfarbe mit den Bereichen des Substrats.

In einer ersten Folge von Beispielen wird ein Substrat 30 mit einem weißen ersten Bereich 31 und einem zweiten schwarzen Bereich 40 mit einer Farbschicht 50 im Siebdruck, wie im Fig. 2A veranschaulicht, bedruckt. Für den durch die Farbschicht bedeckten ersten bzw. zweiten Bereich wurde der Farbabstand ΔE gemessen, wobei die Messung mit einem Gerät der Firma DATACOLOR mit der Lichtart D65 und einem Beobachtungswinkel von 10° erfolgte, was zu einem Beobachter korrespondiert, der auf den zu messenden Bereich mit einem Sichtfeld von 10° mittig zur Hauptblickrichtung blickt (10° Normalbeobachter, siehe "http://de.wikipedia.org/wiki/CIE-Normvalenzsystem). Der für die jeweilige Rezeptur ermittelte Wert ΔE bezieht sich auf den L*a*b*-Farbraum.

Die entsprechende Siebdruckfarbe kann gemäß einer ersten Rezeptur wie folgt zusammengesetzt sein:
Als Farbmittel dienen 40 Gew.-% Aqua-Jet^{®} FGL M 669 Grün lasierend (von der Firma Pröll KG), als Effektpigment 20 Gew.-% Lustrepak^{®} II Lilac (von der Firma Merck KGaA) sowie 40 Gew-% Siebdruckbinder 3850 (der Firma G&D GmbH). Die Messung des Farbabstandes des mit der Farbschicht überdeckten ersten bzw. zweiten Bereichs ergab: ΔE = 44,73.

Die Farbschicht 50 erscheint dabei über dem ersten Bereich 31, d.h. auf weißem Untergrund, grün 52. Der mit der Farbschicht 50 überdeckte zweite Bereich 40 erscheint blau 54.

Gemäß einer zweiten Rezeptur kann die Siebdruckfarbe wie folgt zusammengesetzt sein:
Als Farbmittel dienen 20 Gew.-% Aqua-Jet^{®} FGL M 429 Rotviolett (von der Firma Pröll KG), als Effektpigment 20 Gew.-% Lustrepak^{®} II Yellow (von der Firma Merck KGaA) sowie 60 Gew-% Siebdruckbinder 3850 (der Firma G&D GmbH). Die Messung des Farbabstandes des mit der Farbschicht überdeckten ersten bzw. zweiten Bereichs ergab: ΔE = 23,16.

Die Farbschicht 50 erscheint dabei über dem ersten Bereich 31, d.h. auf weißem Untergrund, violett 52. Der mit der Farbschicht 50 überdeckte zweite Bereich 40 erscheint bronzefarben 54.

Gemäß einer dritten Rezeptur kann die Siebdruckfarbe wie folgt zusammengesetzt sein:
Als Farbmittel dienen 30 Gew.-% Aqua-Jet^{®} FGL M 312 Rot (von der Firma Pröll KG), als Effektpigment 20 Gew.-% Lumina^{®} Royal Blue EH 627 (von der Firma BASF) sowie 50 Gew-% Siebdruckbinder 3850 (der Firma G&D GmbH). Die Messung des Farbabstandes des mit der Farbschicht überdeckten ersten bzw. zweiten Bereich ergab: ΔE = 31,87.

Die Farbschicht 50 erscheint dabei über dem ersten Bereich 31, d.h. auf weißem Untergrund, rot 52. Der mit der Farbschicht 50 überdeckte zweite Bereich 40 erscheint violett 54.

Die Farbschicht 50 kann auch im Stichtiefdruckverfahren aufgebracht werden. Eine beispielhafte Rezeptur für eine geeignete Stichtiefdruckfarbe ist die folgende:
Bindemittel und Farbmittel werden durch die Substanzen 9SL0700 Transparentweiß (77 Gew.-%) und 9SL4729 Blue Reddish (5 Gew.-%) der Firma SICPA SA gebildet. Als Effektpigmente werden 18 Gew.-% Iriodin^{®} Lava Red (der Firma Merck KGaA) eingesetzt. Die Messung des Farbabstandes des mit der Farbschicht überdeckten ersten bzw. zweiten Bereichs ergab: ΔE = 38,58.

Die Farbschicht 50 erscheint dabei über dem ersten weißen Bereich 31 blau 52. Der mit der Farbschicht 50 überdeckte zweite Bereich 40 erscheint rot 54.

Mit Bezug auf das vorstehend genannte erfindungsgemäße Sicherheitselement mit im Stichtiefdruckverfahren aufgebrachter Farbschicht 50 ist als Vorteil zu erwähnen, dass sich auf diese Art und Weise mit verhältnismäßig einfachen Mitteln sogenannte Farbschnitte erzielen lassen, welche bei einer nur mittels Stichtiefdruck aufgebrachten Druckschicht nur mit erheblichen technischen Aufwand möglich sind. Als weiterer Vorteil ist zu erwähnen, dass die im Tiefdruckverfahren, insbesondere im Stichtiefdruckverfahren erzeugten Aufdrucke auch taktil erfassbar sind, da diese beim Druckschritt zeitgleich mit einer zum Aufdruck kongruenten Reliefstruktur erzeugt werden.

Aufgrund des großen Farbabstands ΔE > 20 zeigen alle Sicherheitselemente gemäß den vorstehend näher beschriebenen Rezepturen die eingangs genannten erfindungsgemäßen Effekte und Vorteile.

Als allgemeines Beispiel für Mischungen aus im Wesentlichen nicht deckenden, transparenten und stärker deckenden Interferenzpigmenten sei folgende Mischung erwähnt: Interferenzpigment Lustrepak^{®} II Rot (transparent, 13 Gew.-% bis 23 Gew.-%; Hersteller Merck KGaA) und Iriodin^{®} 504 Rot (deckend, 2 Gew.-% bis 10 Gew.-%; Hersteller Merck KGaA).

Die vorhergehenden Beispiele zeigen, dass vorteilhafte Wirkungen insbesondere dann erzielt werden können, wenn auch die Eigenfarben von Farbmittel und Effektpigmenten in der Druckfarbe zueinander geeignet gewählt werden. Vorteilhaft ist es in diesem Zusammenhang, wenn diese Farben jeweils zwei Sekundärfarben sind, die sich zu einer Primärfarbe mischen, oder wenn zwei an eine Primärfarbe angrenzende Sekundärfarben zu derselben gemischt werden. Nachfolgend sind weitere Beispiele für mittels geeigneter Farbschicht 50 erzielbare Farbeindrücke angegeben:
Bei Mischung eines grünen Interferenzpigments mit einem gelben Buntpigment in der Druckfarbe entsteht, wenn eine daraus gebildete Farbschicht 50 auf einen weißen ersten Bereich 31 aufgebracht wird, ein gelber Farbeindruck, vor einem schwarzen zweiten Bereich 40 erscheint die Farbschicht 50 gelbgrün. Werden stattdessen ein grünes Buntpigment und ein gelbes Interfenfenzpigment zur Herstellung der Druckfarbe verwendet, so erscheint eine daraus gebildete Farbschicht 50 vor schwarzem Untergrund wiederum gelbgrün, vor weißem allerdings grün.

Wird ein schwarzer Untergrund, entsprechend dem zweiten Bereich 40, mit einer Farbschicht 50 überdeckt, welche mittels einer Druckfarbe gebildet wird, die ihrerseits ein grünes Buntpigment und ein violettes Interferenzpigment umfasst, so erscheint der mit der Farbschicht 50 überdeckte dunkle Bereich 40 blau, ein weißer erster Bereich 31 dagegen grün mit einem Stich ins Blau.

Als Sonderfall kann eine Mischung eines bunten Farbmittels, beispielsweise eines blauen Buntpigments, und eines goldenen Effektpigments, beispielsweise eines goldenen Interferenzpigments, angesehen werden. Hier entsteht in der Druckfarbe keine echte Mischfarbe, vielmehr entsteht jeweils lediglich eine leichte Farbverschiebung in die jeweils andere Farbe. Vor einem dunklen Untergrund erscheint die Farbschicht golden mit einem bläulichen Einschlag, vor einem hellen Untergrund erscheint ein Blau mit einem goldenen Sparkling-Effekt.

Sowohl eine Untergrundfarbe zum Bilden des zweiten Bereichs 40 als auch eine Druckfarbe zum Bilden der Farbschicht 50 kann geeignete Zusatzmerkmale umfassen. Solche Zusatzmerkmale sind beispielsweise magnetisierbare Pigmente, lumineszierende Stoffe oder im infraroten Wellenbereich reflektierende oder absorbierende Stoffe. Auch können verwendete Effektpigmente eine oder mehrere der durch die genannten Zusatzstoffe erreichbaren Eigenschaften aufgrund einer entsprechenden Beschichtung bereits aufweisen.

In der nachfolgenden Tabelle sind weitere erfindungsgemäße Rezepturen für die Farbschicht 50 des erfindungsgemäßen Sicherheitselements (Spalte 1), der sich für den Betrachter und die jeweilige Untergrundfarbe ergebende Farbeindruck (Spalte 2) und der für die jeweilige Rezeptur gemessene Farbabstand (ΔE) für den durch die Farbschicht bedeckten ersten und zweiten Bereich des Sicherheitselements (Spalte 3) angegeben.

| | Rezeptur | Farbeindruck | Farbabstand ΔE |
|---|---|---|---|
| 17 % | Lustrepak II Lilac oder | auf schwarzem Untergrund: violett auf weißem Untergrund: orange | 54,45 |
| 17 % | Chaos Splendor Violet | | |
| 5 % | Aquajet FLG M Orange | | |
| 78 % | SD-Binder G&D 3850 | | |
| 17 % | Chaos Splendor Gold | auf schwarzem Untergrund: grünliches Gold auf weißem Untergrund: blau | 36,02 |
| 5 % | Aquajet FGL M Blau lasierend | | |
| 78 % | SD-Binder G&D 3850 | | |
| 17 % | Chaos Splendor Blue | auf schwarzem Untergrund: blau auf weißem Untergrund: gelb | 69,68 |
| 5 % | Aquajet FGL M Gelb | | |
| 78 % | SD-Binder G&D 3850 | | |
| 17 % | Lustrepak Red N | auf schwarzem Untergrund: rot auf weißem Untergrund: gelb | 54,96 |
| 3 % | Aquajet FGL M Gelb | | |
| 80 % | SD-Binder G&D 3850 | | |
| 17 % | Chaos Splendor Blue | auf schwarzem Untergrund: blau auf weißem Untergrund: rot | 42,80 |
| 5 % | Aquajet FGL M Rot | | |
| 78 % | SD-Binder G&D 3850 | | |
| 17 % | Chaos Splendor Green | auf schwarzem Untergrund: grün auf weißem Untergrund: orange | 35,54 |
| 5 % | Aquajet FGL M Orange | | |
| 78 % | SD-Binder G&D 3850 | | |
| 17 % | Chaos Splendor Violet | auf schwarzem Untergrund: violet auf weißem Untergrund: orange | 49,98 |
| 5 % | Aquajet FGL M Orange | | |
| 78 % | SD-Binder G&D 3850 | | |
| 17 % | Chaos Splendor Red | auf schwarzem Untergrund: rot auf weißem Untergrund: blau | 46,95 |
| 5 % | Aquajet FGL M Blau lasierend | | |
| 78 % | SD-Binder G&D 3850 | | |
| 17 % | Chaos Splendor Red | auf schwarzem Untergrund: rot auf weißem Untergrund: grün | 41,22 |
| 5 % | Aquajet FGL M Grün | | |
| 78 % | SD-Binder G&D 3850 | | |
| 25 % | STEP G&D 3321 Kupfer/ Grün | auf schwarzem Untergrund: STEP Farbe je nach Kippwinkel kupfer oder grün auf weißem Untergrund: blau | 56,12 |
| 5 % | Aquajet FGL M Blau lasierend | | |
| 70 % | SD-Binder G&D 3850 | | |
| 25 % | STEP G&D 3310 Grün/ Blau | auf schwarzem Untergrund: STEP-Farbe je nach Kippwinkel grün oder blau auf weißem Untergrund: gelb | 52,85 |
| 5 % | Aquajet FGL M Gelb | | |
| 70 % | SD-Binder G&D 3850 | | |

Anmerkungen zur Tabelle:
Chaos Splendor: Sun Chemical Corporation
Lustrepak: Firma Merck KGaA
Aquajet: Firma Pröll KG
SD-Binder G&D 3850, (wasserbasierte Zubereitung von Kunstharzen): Firma Giesecke & Devrient GmbH
STEP G&D: cholesterische Flüssigkristallpigmente
Messung des Farbabstandes ΔE: Gerät der Firma DATACOLOR,
Lichtart: D 65, Beobachtungswinkel 10°.

Vorteilhaft können fluoreszierende Stoffe, beispielsweise wie folgt, eingesetzt werden: Die Untergrundfarbe, die den zweiten Bereich 40 bildet, umfasst einen rot fluoreszierenden ersten Fluoreszenzstoff und die Druckfarbe zum Bilden der Farbschicht 50 umfasst einen grün fluoreszierenden zweiten Fluoreszenzstoff. Der von der Farbschicht 50 nicht überdruckte zweite Bereich 40 fluoresziert dann rot. Der mit der Farbschicht 50 überdeckte erste Bereich 31 fluoresziert grün. Im Überlappungsbereich, d.h. dort, wo der zweite Bereich 40 von der Farbschicht 50 überdeckt ist, können unterschiedliche Effekte erzielt werden. Bei Einsatz geeignet gewählter Interferenzpigmente zeigt sich auch lediglich eine grüne Fluoreszenz, passergenau zur roten Fluoreszenz im nicht überdruckten zweiten Bereich 40. Dazu können beispielsweise Interferenzpigmente auf der Basis von TiO₂ beschichteten SiO₂ oder Glimmerpigmenten verwendet werden, da TiO₂ als UV-Absorber wirkt und damit die Anregung der Fluoreszenzpigmente in der Untergrundfarbe behindert. Wird anstelle eines derart beschichteten Interferenzpigments ein Flüssigkristallpigment verwendet, so ergibt sich keine Absorption des UV-Lichts, so dass sich im Überlappungsbereich eine weißliche Fluoreszenz zeigt.

Die Farbeindrücke der Farbschicht 50 können weiterhin aufgrund der verschiedenen Viskositäten verwendeter Druckfarben variieren. Die Viskosität der Druckfarbe beeinflusst die räumliche Anordnung der Effektpigmente in der Druckfarbe, wodurch der Farbeindruck der mittels der Druckfarbe gebildeten Farbschicht 50 verändert wird. Eine hochviskose Druckfarbe, beispielsweise eine Stichtiefdruckfarbe, erlaubt plättchenförmigen Interferenzpigmenten nur in sehr beschränkten Rahmen sich parallel auszurichten, wobei eine solche Ausrichtung in einer niedrigviskosen Druckfarbe, beispielsweise einer Siebdruck- oder Flexodruckfarbe, viel eher möglich ist. Entsprechend wirkt eine aus letztgenannter Druckfarbe gebildete Farbschicht glänzender und weist einen deutlich erkennbaren winkelabhängigen Farbkippeffekt auf. Die Farbschicht aus der hochviskosen Druckfarbe, in der die Interferenzplättchen im Wesentlichen zufällig orientiert angeordnet sind, weist einen geringen Glanz auf und ein winkelabhängiger Farbkippeffekt ist nicht zu beobachten. Allenfalls ist es hier möglich, falls magnetisierbare Interferenzpigmente verwendet werden, deren Anordnung durch Anlegen eines entsprechenden Feldes zu beeinflussen. Auch durch entsprechende Temperierung der Druckfarbe kann die Orientierung der Plättchen geringfügig begünstig werden.

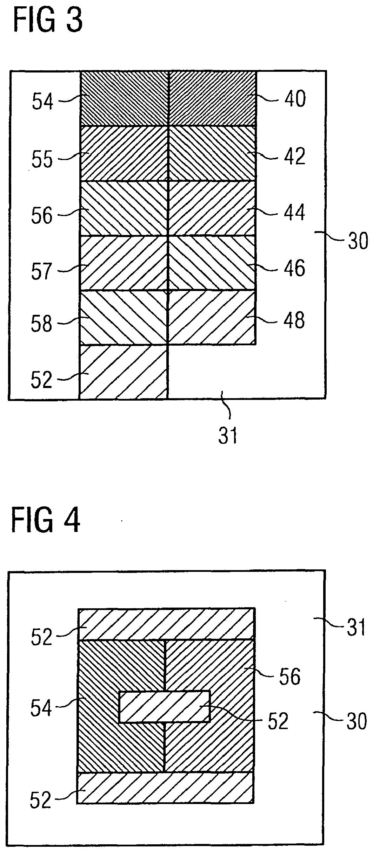

Wie in Fig. 3 illustriert, kann das Sicherheitselement 20 gemäß einer weiteren bevorzugten Ausführungsform zusätzlich zu dem ersten Bereich 31 und dem zweiten Bereich 40 weitere Bereiche 48, 46, 44, 42 aufweisen. Jeder dieser weiteren Bereiche 48, 46, 44, 42 ist von dem ersten Bereich 31 und dem zweiten Bereich 40 sowie von jedem anderen der weiteren Bereiche 48, 46, 44, 42 visuell unterscheidbar in der Weise, wie der erste Bereich 31 von dem zweiten Bereich 40 visuell unterscheidbar ist. Die Farbschicht 50 überdeckt in dieser Ausführungsform auch jeden dieser weiteren Bereiche 48, 46, 44, 42 teilweise oder vollflächig. Damit entstehen für die jeweils von der Farbschicht 50 überdeckten weiteren Bereiche 48, 46, 44, 42 jeweils unterschiedliche Farbeindrücke 58, 57, 56, 55, 54. Die Farbschicht erstreckt sich auf dem Substrat somit über einen in Fig. 3 vertikalen Streifen, welcher sich aus den Bereichen zusammensetzt, die mit den Bezugszeichen 54, 55, 56, 57, 58 und 52 bezeichnet sind. Im gezeigten Ausführungsbeispiel ist jeder der Bereiche 40, 42, 44, 46, 48 von der Farbschicht auf der jeweils linken Hälfte überdeckt, die rechte Hälfte bleibt jeweils unbedeckt, das heißt z. B. der von der Farbschicht 50 überdeckte Bereich 44 erscheint dem Betrachter gemäß dem Farbeindruck 56.

Diese Farbeindrücke unterscheiden sich untereinander und von den Farbeindrücken 52, 54, welche sich ergeben, wenn der erste Bereich 31 und der zweite Bereich 40 von der Farbschicht überdeckt sind. Auf diese Weise kann mit sehr einfachen Mitteln ein mehrfarbiger Effekt erzielt werden, wobei die jeweiligen Farbwechsel an den Grenzen der mit der Farbschicht 50 überdeckten Bereiche 31, 48, 46, 44, 42, 40 optimal passergenau erscheinen. Ein ähnlicher Effekt ist bei Verwendung verschiedenfarbiger Farbschichten und der Notwendigkeit mehrere Druckvorgänge praktisch nicht zu erreichen.

Spezifische Varianten dieser Ausführungsform erlauben beispielsweise die Darstellung eines stufenweisen oder nahezu kontinuierlichen Farbübergangs. Dies kann beispielsweise dadurch erreicht werden, dass, bei weißem Untergrund, d.h. weißem ersten Bereich 31, die Bereiche 48, 46, 44, 42 durch geeignete Rasterung stufenweise in jeweils dunkler erscheinenden Grautönen in den schwarzen zweiten Bereichs 40 überzugehen scheinen (Graukeil). Die Rasterung kann beispielsweise mittels Linien-, Punkt- oder frequenzmodulierter Raster erfolgen. Der Farbeindruck der durch die Farbschicht überdeckten Bereiche ändert sich dann entsprechend stufenweise von einem Farbton 52, entsprechend dem Farbeindruck des überdeckten ersten Bereichs 31, zu einem Farbton 54, entsprechend dem Farbeindruck des überdeckten zweiten Bereichs 40. Wird für die Druckfarbe zum Bilden der Farbschicht beispielsweise ein magentafarbenes Buntpigment und ein blaues Interferenzpigment verwendet, so erscheint der Farbübergang 52, 58, 57, 56, 55, 54 in den überdeckten Bereichen 31, 48, 46, 44, 42, 40 von Magenta 52 nach Violett 54.

Grundsätzlich ist es ferner denkbar, wenn auch gegenwärtig nicht bevorzugt, dass die Farbschicht in Teilbereichen strukturiert ist, insbesondere als vollflächige Rasterung mittels linien-, punkt- oder frequenzmoduliertem Raster gebildet wird.

Der zumindest eine von dem ersten Bereich 31 und dem zweiten Bereich 40 verschiedene weitere Bereich 42 kann sich von dem ersten 31 und zweiten Bereich 40 alternativ oder zusätzlich im Farbton unterscheiden. Auf diese Weise sind weitere Effekte erzielbar, die mit Bezug auf Fig. 4 beschrieben werden sollen. Das dort illustrierte Sicherheitselement 20 erscheint dem Betrachter vierfarbig, wobei die Farbübergänge exakt passergenau erscheinen. Das weiße Substrat 30 bildet den ersten Bereich 31. Weiter erscheinen die Streifen, die mit 52 bezeichnet sind, gemäß einem zweiten Farbeindruck 52, der sich dadurch ergibt, dass der erste Bereich von einer Farbschicht 50 überdeckt wird. Ein weiterer Farbeindruck 54 zeigt sich im Bereich eines mit der Farbschicht 50 überdeckten zweiten Bereichs, der im unbedruckten Zustand schwarz erscheint. Der mit 56 bezeichnete Bereich schließlich, erscheint in einem von den beschriebenen Farbeindrücken 31, 52, 54 verschiedenen Farbton 56, der daraus resultiert, dass der darunterliegende weitere Bereich 42 des Substrats seinerseits von dem ersten Bereich 31 und dem zweiten Bereich 40 visuell unterscheidbar war, auch hinsichtlich des Farbtons. Bemerkenswert ist, dass dieser Effekt in sehr einfacher Weise dadurch erreicht werden kann, dass das wie beschrieben gebildete Substrat 30 lediglich mit der Farbschicht 50 vollflächig in dem Bereich überdeckt wird, der nun in den Farbeindrücken 52, 54 und 56 erscheint.

Sind erster 31, zweiter 40 und dritter Bereich 42 beispielsweise weiß, schwarz und blau, so ergibt sich beim Überdrucken dieser Bereiche 31, 40, 42 mit einer Druckfarbe, welche ein rotes Buntpigment und ein gelbes Interferenzpigment umfasst, der folgende mehrfarbige Farbeindruck: Auf dem weißen Untergrund des ersten Bereichs 31 erscheint nur die Buntfarbe Rot, auf dem schwarzen Untergrund des zweiten Bereichs 40 zeigt sich eine Mischfarbe der Farben des Buntpigments und des Interferenzpigments, nämlich Orange. Auf dem blauen Untergrund des dritten Bereichs 42 schließlich erscheint eine dunkelviolette Farbe mit bronzefarbenem Sparkling-Effekt.

Mit Bezug auf die vorstehend in Fig. 1 bis Fig. 4 gezeigten Varianten ist ferner denkbar, dass die Farbschicht ein Effektpigment und ein Farbmittel enthält, welche farblich so aufeinander abgestimmt sind, dass der Farbeindruck für den mit der Farbschicht überdeckten ersten Bereich zumindest bei einem Betrachtungswinkel etwa dem Farbeindruck des von der Farbschicht überdeckten zweiten Bereichs entspricht. Der von der Farbschicht überdeckte erste Bereich fungiert dann quasi als Referenz und stellt die Referenzfarbe dar, die der Betrachter unter einem bestimmten Betrachtungswinkel im Wesentlichen auch für den mit der Farbschicht überdeckten zweiten Bereich erkennt. Insbesondere bei farbkippenden Effektpigmenten weist diese Variante einen hohen Wiedererkennungswert auf.

Wird bei den in Fig. 1 bis Fig. 4 beschriebenen Varianten der Aufdruck der Farbschicht mittels Stichtiefdruckverfahren realisiert, lassen sich durch die Erfindung eindrucksvolle und komplizierte Farbschnitte herstellen, die bei einem nur mit Stichtiefdruck erzeugten Aufdruck mit erheblichem technischen Aufwand verbunden oder sogar technisch nicht möglich sind.

## Patentansprüche

1. Datenträger (10), nämlich ein Wertdokument oder ein Ausweisdokument, mit einem Sicherheitselement (20), wobei das Sicherheitselement (20) ein Substrat (30) mit einem ersten, hellen Bereich (31) und einem davon visuell unterscheidbaren zweiten, dunklen Bereich (40) sowie einer Farbschicht (50), welche den ersten Bereich (31) und den zweiten Bereich (40) des Substrats (30) jeweils teilweise oder vollflächig überdeckt, umfasst, wobei der erste Bereich (31) und der zweite Bereich (40) des Substrats (30) dadurch gebildet sind, dass das Substrat (30) im Bereich des zweiten Bereichs (40) mit einer von einer Substratfarbe visuell unterscheidbaren Untergrundfarbe bedruckt ist und der erste, helle Bereich (31) weiß und der zweite, dunkle Bereich (40) schwarz ausgebildet ist und die Farbschicht (50) Effektpigmente eines Typs und ein Farbmittel umfasst, wobei sich der Farbton des Farbmittels und der Farbton des Effektpigments voneinander unterscheiden, und sich ein Farbeindruck (52) des mit der Farbschicht (50) überdeckten ersten Bereichs (31) von einem Farbeindruck (54) des von der Farbschicht (50) überdeckten zweiten Bereichs (40) unterscheidet.

2. Datenträger (10) nach Anspruch 1, **dadurch gekennzeichnet, dass** die Effektpigmente als Interferenzpigmente, Flüssigkristallpigmente und/oder transluzente Pigmente ausgebildet sind.

3. Datenträger (10) nach Anspruch 1 oder 2, **dadurch gekennzeichnet, dass** die Farbschicht (50) als Farbmittel lösliche Farbstoffe und/oder Pigmente umfasst.

4. Datenträger (10) nach einem der Ansprüche 1 bis 3, **dadurch gekenn**z**eichnet**, dass die Farbschicht (50) auf das Substrat (30) aufgedruckt ist, vorzugsweise im Tiefdruck-, Stichtiefdruck- , Flexodruck- , oder Siebdruckverfahren.

5. Datenträger (10) nach einem der Ansprüche 1 bis 4, **dadurch gekennzeichnet, dass** der erste Bereich (31) direkt an den zweiten Bereich (40) angrenzt, wobei der erste Bereich (31) und der zweite Bereich (40) derart zueinander angeordnet sind, dass sich aufgrund der visuellen Unterscheidbarkeit der Bereiche (31; 40) im Grenzbereich ein Muster ergibt.

6. Datenträger (10) nach einem der Ansprüche 1 bis 5, **dadurch gekennzeichnet, dass** das Substrat (30) zumindest einen weiteren Bereich (42) umfasst, welcher von dem ersten Bereich (31) und dem zweiten Bereich (40) und, falls vorhanden, von einem anderen weiteren Bereich (44; 46; 48) visuell unterscheidbar ist und von der Farbschicht (50) teilweise oder vollflächig überdeckt ist.

7. Verfahren zur Herstellung eines Datenträgers (10) nach einem der Ansprüche 1 bis 6, umfassend die Schritte:
Bereitstellen eines Substrats (30) mit einem ersten Bereich (31) und einem davon visuell unterscheidbaren zweiten Bereich (40), wobei der erste, helle Bereich (31) weiß und der zweite, dunkle Bereich (40) schwarz ausgebildet ist;
- Bereitstellen einer Druckfarbe, wobei die Druckfarbe Effektpigmente eines Typs und ein Farbmittel umfasst und sich der Farbton des Farbmittels und der Farbton des Effektpigments voneinander unterscheiden;
- Bilden einer Farbschicht (50) auf dem Substrat (30) mittels der Druckfarbe derart, dass der erste Bereich (31) und der zweite Bereich (40) jeweils teilweise oder vollflächig von der Farbschicht (50) überdeckt werden,
wobei die Effektpigmente und das Farbmittel derart ausgewählt werden, dass sich der Farbeindruck (52) des mit der Farbschicht (50) überdeckten ersten Bereichs (31) von dem Farbeindruck (54) des von der Farbschicht (50) überdeckten zweiten Bereichs (40) unterscheidet und der erste Bereich (31) und der zweite Bereich (40) des Substrats (30) dadurch gebildet werden,
dass das Substrat (30) im Bereich des zweiten Bereichs (40) mit einer von einer Substratfarbe visuell unterscheidbaren Untergrundfarbe bedruckt wird.

## Claims

1. A data carrier (10), namely a value document or an identification document, with a security element (20), wherein the security element (20) comprises a substrate (30) with a first, light region (31) and a second, dark region (40) that is visually distinguishable therefrom, and an ink layer (50) which covers the first region (31) and the second region (40) of the substrate (30) respectively partially or all over, wherein the first region (31) and the second region (40) of the substrate (30) are formed by the substrate (30) being printed in the region of the second region (40) with a background ink that is visually distinguishable from a substrate color, and the first, light region (31) is configured to be white and the second, dark region (40) is configured to be black, and the ink layer (50) comprises effect pigments of one type and a colorant, wherein the color tone of the colorant and the color tone of the effect pigment differ from each other, and a color impression (52) of the first region (31) covered by the ink layer (50) differs from a color impression (54) of the second region (40) covered by the ink layer (50).

2. The data carrier (10) according to claim 1, **characterized in that** the effect pigments are configured as interference pigments, liquid crystal pigments and/or translucent pigments.

3. The data carrier (10) according to claim 1 or 2, **characterized in that** the ink layer (50) comprises soluble dyes and/or pigments as colorant.

4. The data carrier (10) according to any of the claims 1 to 3, **characterized in that** the ink layer (50) is printed onto the substrate (30), preferably in the gravure, intaglio, flexographic, or screen printing method.

5. The data carrier (10) according to any of the claims 1 to 4, **characterized in that** the first region (31) directly adjoins the second region (40), wherein the first region (31) and the second region (40) are mutually arranged such that there results a pattern in the boundary region due to the visual distinguishability of the regions (31; 40).

6. The data carrier (10) according to any of the claims 1 to 5, **characterized in that** the substrate (30) comprises at least one further region (42) which is visually distinguishable from the first region (31) and the second region (40) and, if present, from a different further region (44; 46; 48), and is covered partially or all over by the ink layer (50).

7. A method for manufacturing a data carrier (10) according to any of the claims 1 to 6, comprising the steps of:
- making available a substrate (30) with a first region (31) and a second region (40) visually distinguishable therefrom, wherein the first, light region (31) is configured to be white and the second, dark region (40) is configured to be black;
- making available a printing ink, wherein the printing ink comprises effect pigments of one type and a colorant and the color tone of the colorant and the color tone of the effect pigment differ from each other;
- forming an ink layer (50) on the substrate (30) by means of the printing ink, such that the first region (31) and the second region (40) are respectively covered partially or all over by the ink layer (50),
wherein the effect pigments and the colorant are selected such that the color impression (52) of the first region (31) covered by the ink layer (50) differs from the color impression (54) of the second region (40) covered by the ink layer (50), and the first region (31) and the second region (40) of the substrate (30) are formed by the substrate (30) being printed in the region of the second region (40) with a background ink that is visually distinguishable from a substrate color.

## Revendications

1. Support de données (10), à savoir un document de valeur ou un document d'identification, comportant un élément de sécurité (20), cependant que l'élément de sécurité (20) comprend un substrat (30) qui a une première zone (31), claire, et une deuxième zone (40), foncée, en étant visuellement distinguable, ainsi qu'une couche d'encre (50) recouvrant respectivement partiellement ou à pleine surface la première zone (31) et la deuxième zone (40) du substrat (30), cependant que la première zone (31) et la deuxième zone (40) du substrat (30) sont constituées par le fait que le substrat (30) est, dans la zone de la deuxième zone (40), imprimé avec une encre de fond visuellement distinguable d'une couleur du substrat, et que la première zone (31), claire, est réalisée en blanc, et la deuxième zone (40), foncée, est réalisée en noir, et que la couche d'encre (50) contient des pigments à effets d'un type et un agent colorant, cependant que la teinte de l'agent colorant et la teinte du pigment à effets se distinguent l'une de l'autre, et qu'une impression de couleur (52) de la première zone (31) recouverte par la couche d'encre (50), se distingue d'une impression de couleur (54) de la deuxième zone (40) recouverte de la couche d'encre (50).

2. Support de données (10) selon la revendication 1, **caractérisé en ce que** les pigments à effets sont réalisés sous forme de pigments d'interférence, de pigments cristaux liquides et/ou de pigments translucides.

3. Support de données (10) selon la revendication 1 ou 2, **caractérisé en ce que** la couche d'encre (50) contient, en tant qu'agent colorant, des substances colorantes solubles et/ou des pigments.

4. Support de données (10) selon une des revendications de 1 à 3, **caractérisé en ce que** la couche d'encre (50) est imprimée sur le substrat (30), de préférence par impression en creux, impression en creux par gravure, flexographie ou sérigraphie.

5. Support de données (10) selon une des revendications de 1 à 4, **caractérisé en ce que** la première zone (31) est directement adjacente à la deuxième zone (40), cependant que la première zone (31) et la deuxième zone (40) sont agencées de telle façon l'une par rapport à l'autre que, en raison du caractère visuellement distinctif des zones (31; 40), un motif est engendré dans la zone limite.

6. Support de données (10) selon une des revendications de 1 à 5, **caractérisé en ce que** le substrat (30) comprend au moins une autre zone (42) qui est visuellement distinguable de la première zone (31) et de la deuxième zone (40), et, s'il y en a une, d'une autre zone (44; 46; 48), supplémentaire, et qui est recouverte partiellement ou à pleine surface par la couche d'encre (50).

7. Procédé de fabrication d'un support de données (10) selon une des revendications de 1 à 6, comprenant les étapes :
- mise à disposition d'un substrat (30) ayant une première zone (31) et une deuxième zone (40) en étant visuellement distinguable, cependant que la première zone (31), claire, est réalisée en blanc, et la deuxième zone (40), foncée, est réalisée en noir ;
- mise à disposition d'une encre d'impression, cependant que l'encre d'impression comprend des pigments à effets d'un type et un agent colorant, et que la teinte de l'agent colorant et la teinte du pigment à effets se distinguent l'une de l'autre ;
- constitution de la couche d'encre (50) sur le substrat (30) au moyen de l'encre d'impression, de telle façon que la première zone (31) et la deuxième zone (40) sont recouvertes respectivement partiellement ou à pleine surface par la couche d'encre (50),
cependant que les pigments à effets et l'agent colorant sont sélectionnés de telle façon que l'impression de couleur (52) de la première zone (31) recouverte par la couche d'encre (50), se distingue de l'impression de couleur (54) de la deuxième zone (40) recouverte de la couche d'encre (50), et que la première zone (31) et la deuxième zone (40) du substrat (30) sont constituées par le fait que le substrat (30) est, dans la zone de la deuxième zone (40), imprimé avec une encre de fond visuellement distinguable d'une couleur du substrat.
